# EUROPEAN PATENT SPECIFICATION

(11) **EP 0 519 115 B1**
(45) Date of publication and mention of the grant of the patent: **11.01.1995**
(21) Application number: 91112570.6
(22) Date of filing: 25.07.1991
(51) Int. Cl.: B60R 1/06

(54) **Foldable outside rearview mirror**
Abklappbarer Aussenrückblickspiegel
Rétroviseur extérieur rabattable

(30) Priority: 17.06.1991 JP 53564/91 U
(43) Date of publication of application: 23.12.1992
(73) Proprietor: MURAKAMI KAIMEIDO CO., LTD, Shizuoka-Ken, 422 (JP)
(72) Inventor: Oishi, Katsuyoshi, Ogasa-gun, Shizuoka-ken 437-16 (JP)
(74) Representative: Riederer Freiherr von Paar zu Schönau, Anton

(56) References cited:
- EP-A- 0 383 355
- PATENT ABSTRACTS OF JAPAN vol. 13, no. 567 (M-908)(3915) 15 December 1989

## Description

### Background of the Invention

The present invention relates to a door mirror of a motor vehicle and, more particularly, to a foldable outside rearview mirror having a mirror body capable of erecting and folding.

To avoid the damage of not only the mirror itself but also the object with which the vehicle comes into collision during driving or for the necessity of narrowing the vehicle width when the vehicle parks in a narrow parking or when the vehicle is transported on board, it is well known that the door mirror of the motor vehicle is what the people call a foldable door mirror capable of holding an attitude of folding forwardly or backwardly as disclosed e.g. by Japanese Utility Model Application Laid Open Nos. Sho 61-203854 and Sho 61-139738. In the door mirror as previously described, a shaft extends upwardly from an extending portion of a base and is inserted into a socket portion of a frame to which a mirror body is secured. Further, in the door mirror, a clearance is formed between an upper surface of a root portion of the shaft and a lower surface of the socket by intermediary disposing of several steel balls in concave portions which are respectively provided at a flat surface around the root portion of the shaft and the lower surface of the socket, while a coil spring is disposed around the socket and washers and a U-shape plate for the spring are secured at the upper end of the shaft. Since the frame is attached by the elasticity of the coil spring, the respective steel balls engage in each of the concave portions which are formed on both, the root portion of the shaft and the under surface of the frame; resultantly the mirror body retains a determined attitude.

In the conventional door mirror, when the mirror body is actuated to rotate from the normal attitude to the rearwardly folded attitude to avoid the collision or the like, since the steel balls rotatably move after running over any of concave portions which are disposed on the under surface of the frame or the upper surface of the root portion of the shaft, the mirror body secured on the frame slightly raises up and then returns to the original normal attitude again, slightly going down; thereby according to the vertical movement of the mirror body, a noise of the steel balls running over the concave portions is caused.

To overcome such disadvantages as described above, a mirror which is disclosed by Japanese Patent Application Laid Open No. Sho 64-63434 is known wherein a leaf spring and a steel ball are provided around the shaft which is erected at the side of a base through the intermediary of the leaf spring, thereby at the time of the mirror rotating, the mirror body is prevented from moving vertically by burying the steel ball. In this case, the mirror is merely pressed by the leaf spring which is provided around the comparatively short shaft, and due to an insufficient holding of the mirror body, there still has been a disadvantage that a chattering on the mirror surface occurs easily.

In Japanese Patent Application Laid open No. Hei-1-237 235 a mirror is described which is driven by a system folding the frame of the mirror without any vertical movement. However, this device is of rather complex mechanics and uses steel balls as coupling protrusions which are each supported by three elements. Thus it is possible that the steel balls jam between the supporting elements while folding the frame of the mirror or emerge from these elements by reason of wear or variation in production.

European Patent Application 0 383 355, which corresponds to the preamble of claim 1, shows a foldable mirror system having clutching means for electric folding and separate reference position means for folding by an external force. The clutching means comprises a guide plate surrounding the shaft rotationally locked to the base. This system is complicated and expensive.

An object of the present invention is to provide a foldable rearview mirror capable of both, by internal motor power or by an external force, erecting and folding the mirror body smoothly by a simple and reliant construction.

### Summary of the Invention

The object is accomplished by the invention defined in claim 1 and preferred arrangements are described in the subclaims. By a simple and reliant construction, according to a preferable embodiment of the present invention, the frame for attaching the mirror body retains the surface contact with the upper surface of the extending portion of the base, restricting the vertical movement when the mirror body disposed on the base is rotated to the erected or folded attitude, by means of a ball and clutch type mirror positioning device which is energized by one spring which is disposed around the periphery of the shaft which is erected on the extending portion of the base to hold the rotation of the frame. The rear-view mirror, according to a usual use, may be a door mirror.

The mirror positioning device includes a guide plate which is engaged in the shaft in locking the rotation thereof, a plurality of small apertures provided on the same circumference of the guide plate, steel balls vertically movably inserted in the small apertures respectively and concave portions provided on the upper surface of the end plate of the frame to receive the steel balls therein. This assembly serves both purposes, to keep the motor drive end gear non-rotating during normal operation while allowing it to become disengaged in case of a high external torque, and to catch the frame in its standard positions, by means of a simple and non-critical construction.

It is possible to form steel balls of the guide plate in the form of a plurality of ball-shaped projections which are integrally formed on the same circumference of the guide plate, or to replace it by semicircular-shaped, angle-shaped or trapezoidal-shaped radial projections which are provided on the under surface of the guide plate. Further, the mirror according to the present invention is applicable for an electric foldable door mirror by providing an electric motor and a speed reduction gear train respectively provided in the mirror body, by attaching a gear to the shaft which supports the mirror body and by attaching a door mirror positioning device between the gear and the upper surface of the frame.

In the mirror according to the embodiment of the present invention, in case that the steel balls run over through concaves when the mirror body rotates, only the balls which are held by the guide plate move vertically, while the frame is not subject to move vertically, thereby a blur (a chattering) of the mirror surface is prevented from occurring and the whole of the mirror is held stably.

### Brief Description of the Drawings

These and other objects and many of the attendant advantages of this invention will be readily appreciated and the same becomes understood by reference to the following detailed description when considered in connection with the accompanying drawing.
- Fig. 1: is a partially sectional fragmental front view of a foldable door mirror assembly according to one embodiment of the present invention;
- Fig. 2: is an exploded perspective view of a shaft and a positioning device of the door mirror assembly shown in Fig. 1;
- Fig. 3: is a partial sectional view indicating the function of balls for positioning when the door mirror rotates;
- Fig. 4: is a perspective view of another embodiment of a guide plate of the positioning device;
- Fig. 5: is a perspective view of another embodiment of the guide plate of the positioning device;
- Fig. 6: is a partially sectional front view of an embodiment of the door mirror which is applied for an electrical foldable door mirror;
- Fig. 7: is an exploded perspective view of the shaft and the positioning device according to the embodiment of the present invention shown in Fig. 6;
- Fig. 8: is a sectional view indicating steel balls retained in the guide plate of the positioning device shown in Fig 7;
- Fig. 9: is an enlarged sectional view of the peripheriy of the shaft shown in Fig. 6;
- Fig. 10: is an exploded perspective view of another embodiment of the electric foldable door mirror shown in Fig. 6;
- Fig. 11: is a perspective rear side view of the guide plate according to the embodiment shown in Fig. 10; and
- Fig. 12: is a sectional view of the embodiment in which a different guide plate is mounted as compared to the assembly shown in Fig. 9.

### Description of the Preferred Embodiments

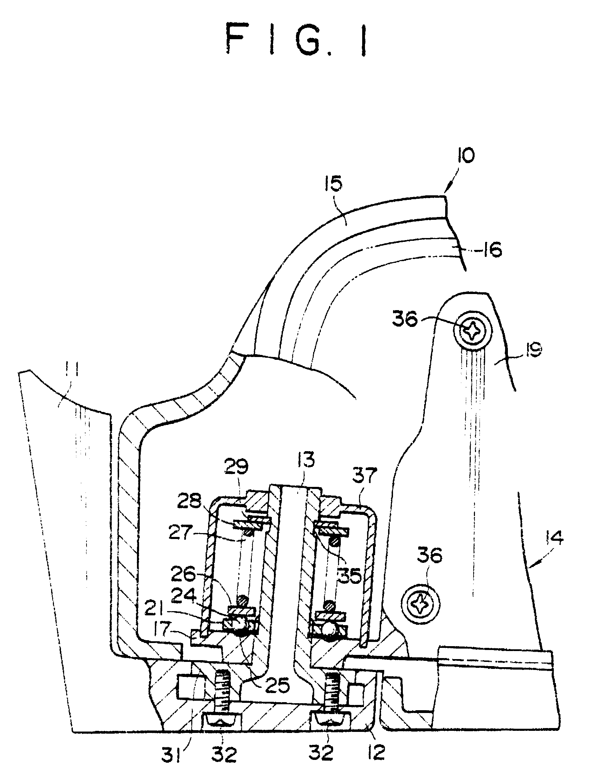

The present invention will now be described in detail with reference to the drawings. Referring first to Fig. 1, there is shown an outer rearview mirror assembly 10 which is suitable to be associated with a motor vehicle. It includes a base 11, a shaft 13 erected on an extending portion 12 of the base 11, a frame 14 rotatably supported by the shaft 13, a mirror body 15 generally being a housing secured to the frame 14, and a mirror element 16 tiltably retained at the front portion of the frame 14.

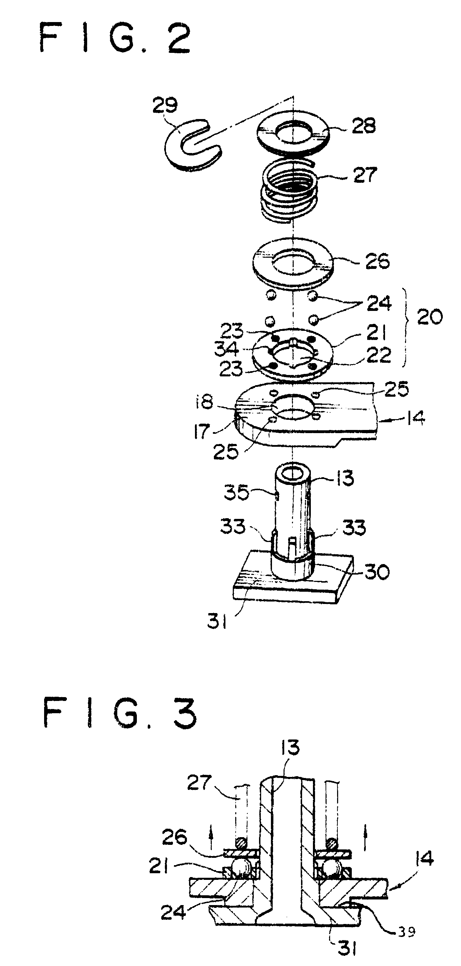

The frame 14 comprises a flat end plate 17 through which the shaft 13 penetrates, a hole 18 (Fig. 2) formed approximately at the center of the end plate 17 to receive the shaft therethrough and a wing 19 which forms an approximately vertical surface extending upwardly from one end of the end plate 17. The wing 19 is secured on the inner wall of the mirror body 15 by screws 36, 36, and at the front surface of the wing 19, an actuator unit (not shown) is attached to adjust the reflection angle of the mirror. The end plate 17 contacts the upper surface of the extending portion 12 of the base 11 so as to be capable of rotating and sliding around the shaft, and disposed on the upper portion of the end plate 17 are both: a positioning device 20 (Fig. 2) for the frame 14 and a coil spring 27.

The positioning device 20 comprises a guide plate 21 engaged with the shaft 13 in locking the rotation of itself, the guide plate 21 having a central hole 22, a plurality of small apertures 23 being provided on the same circumference of the guide plate 21, steel balls 24 each vertically movably inserted into one of the small apertures 23, concave portions 25 provided on the upper surface of the end plate 17 of the frame to receive the steel balls 24 therein and a washer 26 pressed into contact with the upper portion of the steel balls 24 by the elasticity of the coil spring 27 (as shown in Fig. 2).

The shaft 13 has a hollow cylindrical form to receive a harness line of the actuator unit therethrough, and has a slightly larger root portion 30 having an outer diameter enabling engagement through the hole 18 of the end plate 17, and under the root portion 30, an approximately horizontal plate 31 is integrally formed. The plate 31, as shown in Fig.1 is secured on the extending portion 12 by screws 32, 32 inserted from the rear surface of the extending portion 12. Predetermined length projections 33 are provided at several positions of the outer periphery of the shaft, extending upwardly from the root portion 30. The projections 33 are engaged in grooves 34 provided at the hole 22 of the guide plate 21, thereby the guide plate 21 is attached in locking engagement as concerns the rotation thereof. This locking device is not limited to the type comprising projections and grooves and it is also possible to use a chamfer type structure or the like. A groove 35 is provided near the upper end of the shaft 13 to hold both: a washer 28 for pressing the coil spring and a U-shaped plate 29 received in the groove 35 for fixing the washer therethrough. A numeral 37 shown in Fig. 1 indicates a cover to protect both the coil spring 27 and the positioning device 20 both provided around the shaft.

Fig. 1 shows the erected attitude of the door mirror body 15. In said attitude, each of the steel balls 24 which are held by the guide plate 21 respectively engages one of the concave portions 25 of the end plate 17, whereby the attitude of the mirror body 15 is retained. When the mirror body 15 is folded, it rotates in retaining a slide surface 39 contact by both, the lower surface of the frame end plate 17 and the upper surface of the plate 31 provided around the shaft 13, which are contacting each other. During the rotation of the mirror body, as shown in Fig. 3, the steel balls 24 which are held by the guide plate 21 in locking the rotation thereof, release from the concave portions 25 and move on the upper side of the end plate 17, whereby the washer 26 is slightly raised up to press the coil spring 27. By the pressure as described above, the folding attitude of the mirror body is retained; but it is possible to return the mirror body to the original erected attitude while prohibiting the vertical movement thereof, due to the slide surface contact of the frame end plate 17 with the plate 31 of the shaft side.

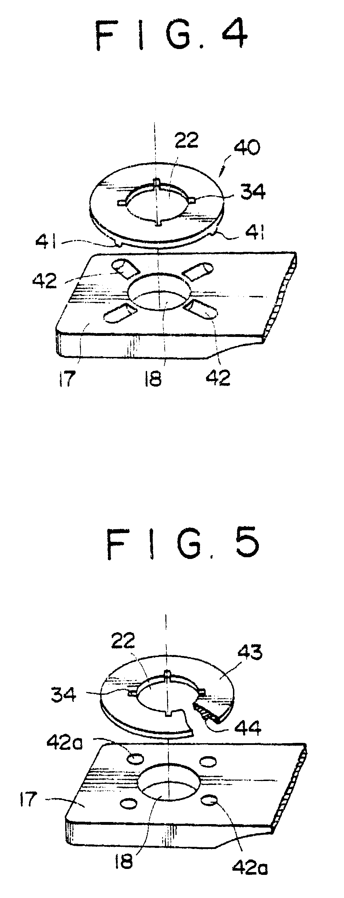

Fig. 4 indicates another embodiment of the positioning device. In the device, in place of steel balls, a guide plate 40 is integrally formed with such as segmental semi-circular-shaped, angle-shaped or trapezoidal-shaped projections 41 extending the the lower radial direction thereof, and concaves 42 are provided on the upper surface of the frame end plate 17 to receive the projections 41 therethrough. Fig. 5 indicates a still further embodiment wherein a plurality of spherical projections 44 are provided at the same radial diameter position of the under surface of a guide plate (a ball receiving plate) 43 and are engaged in concave portions 42a of the frame end plate 17. The guide plates 40 , 43 are engaged with the shaft 13 in locking the rotation of itself and in axially, i.e. vertically movable manner. In any of the embodiments shown in Fig.s 4 and 5, the projections 41, 44 engage in concaves 42, 42a when the mirror body 15 is in the erected attitude. When the mirror body is in the folded attitue, said projections are released from the concaves. And at the time when the mirror body rotates, the surfaces are in contact as previsously described so that any vertical movement or chattering of the mirror body is prevented.

Fig.s 6 to 12 indicate embodiments wherein a mirror assembly as described is applied for an electrical foldable door mirror. Same numerals are alloted to same elements as in Fig.s 1 to 5.

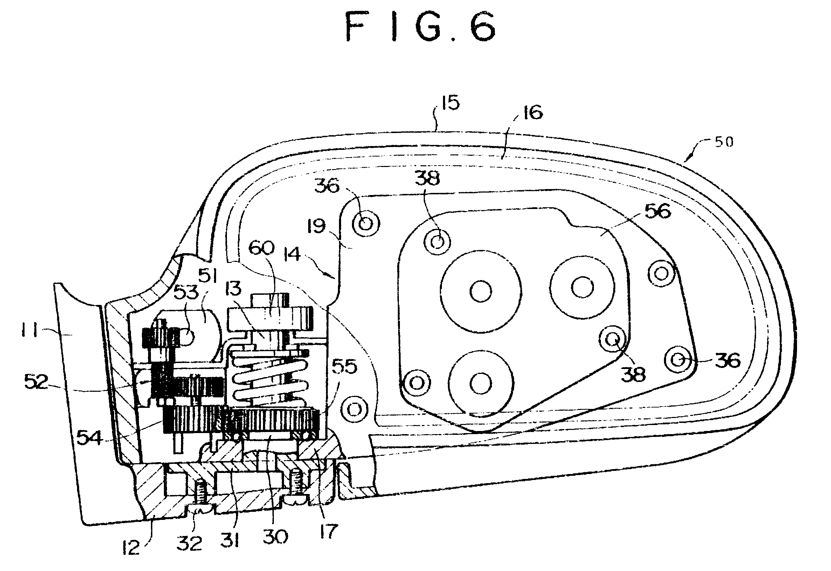

An assembly 50 shown in Fig. 6 is composed of a motor 51 and a speed reduction gear mechanism 52 connected with the motor so that they are further employed in the frame 14 near to the shaft 13 of the assembly, which is indicated in Fig. 1. The speed reduction gear mechanism 52 comprises a gear train which is connected with a worm 53 of the motor output axis, and an end gear 54 thereof engages a gear 55 which is lockingly mounted on the shaft 13. The wing 19 of the frame 14 is secured at the inner wall of the mirror body 15 by the screws 36, 36 and an actuator unit 56 is secured at the front surface of the wing 19 by screws 38, 38 to adjust the reflection angle of the mirror element 16. The shaft 13 has a hollow cylindrical form to receive a harness line (not shown) of the actuator unit 56 therethrough. The numeral 60 of Fig. 6 indicates a switch for detecting the rotating position of the mirror body.

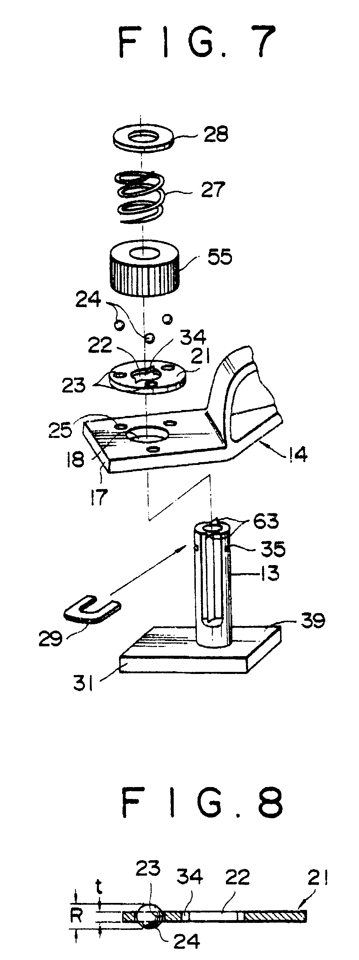

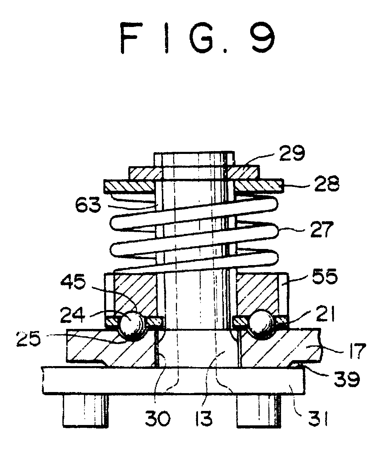

Fig. 7 indicates an exploded perspective view of the relation of the shaft and the frame. Along the generatrix direction of the shaft 13, projection strips 63 are formed. On the shaft 13 which upwardly penetrates through the hole 18 provided in the end plate 17 of the frame, are mounted the positioning guide plate 21 provided with apertures 23 far retaining the plurality of steel balls 24, the gear 55, the spring 27 and the washer 28 in this order, and further the U-shape plate 29 is engaged in the upper stage groove 35 thereof. The under surface of the frame end plate 17 and the upper surface of the plate 31 are subject to be the rotating slide surface 39. On the concentric circle between the under surface of the gear 55 and the upper surface of the end plate 17, concaves 25, 45 are respectively formed to receive the steel balls 24 therein (as shown in Fig. 9). Grooves 34 are provided at the axial hole 22 of the positioning plate 21 in the embodiment which is indicated in Fig. 7 and projection strips 63 of the shaft 13 are engaged in the grooves 34 to mount the shaft while locking the rotation thereof. Further, as shown in Fig. 8, the guide plate 21 has the plurality of apertures 23 on the same circumference thereof and the steel balls 24 are vertically movably retained therein. In comparison to the diameter R of the steel balls 24, the thickness t of the guide plate 21 is set to be very thin (Fig. 8).

Fig.s 6 and 9 indicate an attitude of the mirror body 15 staying in a neutral position, that is, in a normal position and steel balls 24 adequately engage the concaves 25, 45, which are formed on the surface where the frame 14 and the gear 55 oppose each other.

When the mirror body is electrically folded, the motor 51 is actuated to rotate the mirror body 15 from the normal attitude to the rearwardly or forwardly folded attitude by an intermediary of the frame 14, and the end gear 54 of the speed reduction gear train which engages with the gear 55 rotates around the periphery of the shaft 13. At that time, the ball clutch which is formed by the steel balls 24 and concaves 25, 45 functions effectively, whereby, in accordance with the rotation of the end gear 54, the frame 14 rotates around the periphery of the shaft. Resultantly the mirror body can be rotated into the determined folded position.

If an accidental impact occurs on the mirror body, the steel balls 24 which are provided between the frame end plate 17 and the gear 55 are instantly affected by a larger external force than the torque of releasing the steel balls from the concave portions 25, 45 in the tangential direction thereof, so that all balls disengage from their concaves, thereby the mirror body can be forced to rotate.

When the mirror body is returned from the folded attitude to the normal attitude, the frame 14 is rotated in reverse from the present position and can return to the original position by rotating along the slide surface 39 which is the contact face between the plate portion 31 and the under surface of the frame end plate 17, centering around the shaft 13. When the mirror body is manually forced to rotate, the steel balls 24 are affected by a larger external force than the torque to release it from the concave portions 25, 45 in the tangential direction thereof; thereby the engagement of the gear 55 with the steel balls 24 is released to rotate the mirror body into the determined folded attitue.

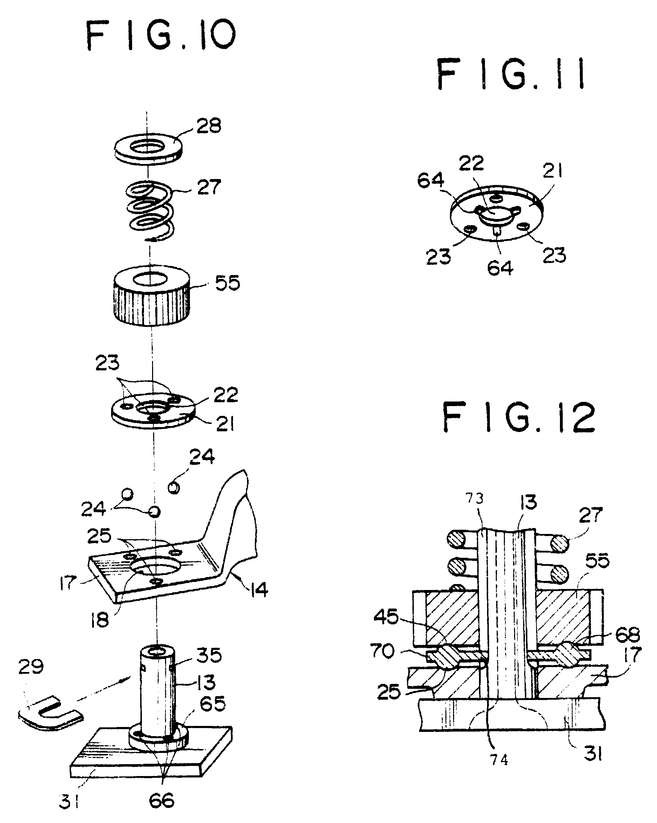

Fig. 10 is an exploded view of an embodiment of the present invention in which a locking means of the guide plate is separately formed. A plurality of projections 64 (as shown in Fig. 11) are provided around the periphery of the axial hole 22 at the underside of the guide plate 21 which is intermediarily attached between the frame end plate 17 and the gear 55. The projections 64 are respectively engaged in a plurality of apertures 66 provided at a stage 65 which is formed on the plate 31, whereby the guide plate 21 is connected to the shaft 13 in locking relation with reference to the rotation thereof. Except of the composition as previously described, the respective elements are the same as the elements of the composition of Fig. 7 and respective numerals are alloted to the same elements as in Fig. 7.

In the embodiments which are respectively illustrated by Fig.s 7 and 10, the positioning device provided with convex portions is composed of the guide plate and the steel balls, said guide plate having through holes capable of loosely and vertically movably retaining the plurality of steel balls on the same circumference, and is connected with the shaft which projects from the base locked with reference to rotation therewith. As shown in Fig. 12, it is possible to uniform or make integral said balls with the guide plate, that is, a plate-shaped member 70 is integrally formed with a plurality of ball-shaped convexes 68 on an equal dimension thereof and is anti-rotatably but vertically movably attached to the shaft by the combination of triangular grooves 73 formed in a direction of generatrix of the shaft 13 and rotation locking projecting corners 74 engaged with the grooves.

Further, in place of said ball-shaped convexes (as shown in Fig. 12), it is possible to form a plurality of segmental trapezoidal or triangle projections as shown in Fig.s 4 and 5 integrally with the plate member and projecting in a radial direction of the both surfaces thereof and corresponding to the above, radial concave portions being also provided on the lower surface of the gear 55 and/or the upper surface of the frame end plate 17.

In the embodiments illustrated in the figures following after Fig. 7, same effects are found as which is illustrated by Fig. 1, that is, if the vibration of the vehicle body or an external force such as a rotation of the mirror body is added, the frame does not move vertically and no chattering is caused in the mirror body.

## Claims

1. An outside rearview mirror assembly foldable between an erected and folded positions, comprising:
a base (11) to be mounted to a vehicle body and having a base extending portion (12) which on top has an upper supporting surface (39);
a shaft (13) mounted on the base extending portion (12) within the area of the upper supporting surface (39), the axis of the shaft (13) constituting the folding axis; a mirror body (15) carried by a frame (14) rotatable about the shaft (13);
an end plate (17) of the frame (14) rotatably encircling the shaft (13), having a bottom face and being supported by the base extending portion (12) with said bottom face being maintained at a constant distance and parallel with reference to the opposing upper supporting surface (39) of the base extending portion (12) so as not to induce any vertical translation during relative rotational movement;
a frame positioning device (20) for the rotatable frame, which device includes a position reference body (21, 40, 43, 70) and defines predetermined orientations of the frame in relation to the base and is loaded by a spring (27), which releasably presses coupling protrusions (24, 41, 44, 68) into complementary coupling recesses (25, 42, 42a) thereby, with reference to rotational position, releasably coupling the end plate (17) of the frame (14) to the position reference body (21, 40, 43, 70), the frame positioning device (20) including the position reference body (21, 40, 43, 70) being arranged at the side of the end plate (17) opposite to the base extending portion (12), characterized in that the position reference body (21, 40, 43, 70) is a guide plate surrounding the shaft (13) rotationally locked to the base (11), and the recesses (25, 42 and 42a) or the protrusions (24, 41, 44, 68) are on the end plate (17).

2. The mirror assembly according to claim 1, characterized in that the base extending portion (12) supporting the end plate (17) of the frame is a root portion of the shaft (13) and the bottom face of said end plate (17) contacts the upper surface of the base extending portion (12).

3. The mirror assembly according to claim 1 or 2, characterized in that the coupling protrusions (24, 68) also engage complementary coupling recesses (45) of a driving disk coupled to a folding and erecting motor (51).

4. The mirror assembly according to any of claims 1 to 3, characterized in that the coupling protrusions are balls (24) guided in a cage disk which is the position reference body (21).

5. The mirror assembly according to claim 4, characterized in that the position reference body (21) performing as cage disk and holding the balls (24) non-rotatable around the shaft engages the shaft (13), a plurality of small apertures (23) are provided on the same circumference of the cage disk wherein the balls are loosely inserted, and the coupling recesses are concave portions (25) on the respective surface of the end plate (17) to receive the balls (24) therein, a washer (26) pressing the balls (24) by the elasticity of the spring (27) which is a coil spring arranged around the periphery of the shaft (13) and at its other end contacting an axially fixed washer (28).

6. The mirror assembly according to any of claims 1 to 3, characterized in that the frame positioning device (20) engages the shaft (13) in a manner rotationally fixed and vertically movable in respect to the shaft, and at its side facing the end plate (17) of the frame (14) there project a plurality of the coupling protrusions (41, 44), the coupling recesses being concave portions (41, 42a) on the opposing surface of said end plate (17), the side with the coupling protrusions and the surface with the concave portions being pressed together by the spring (27).

7. The mirror assembly according to claim 3 characterized in that the folding and erecting motor (51) and a speed reduction gear (52) provided in the mirror body (15) and having an end gear (54), the latter engaging a gear (55) which in a rotationally fixed manner is attached to the shaft (13) via the balls (24) held by the guide plate (21), constitute an actuating device, the gear (55) attached to shaft (13) serving as the driving disk.

8. The mirror assembly according to claims 3 or 7, characterized in that the position reference body (21, 70) which is vertically movable along the shaft (13) is inserted into a clearance formed between the gear (55) and the end plate (17) of the frame (14).

9. The mirror assembly according to claim 8, characterized in that the position reference body (70) has ball portions (68) received in concave portions (25, 45) at respective surfaces opposite to each other of the gear (55) and the end plate (17).

10. The mirror assembly according to claims 4 and 8, characterized in that the position reference body which is in the form of a guide plate (21) has through holes (23) to loosely retain the balls (24) on an equal radial dimension around the shaft (13); and the balls (24) are provided in the through holes (23) and are capable of moving in vertical direction.

11. The mirror assembly according to claim 9, characterized in that the ball portions (68) are integrally formed with the position reference body (70) in the form of a plurality of projections on equal radial distances from the shaft axis.

## Patentansprüche

1. Außenrückblickspiegel-Baugruppe, die zwischen einer ausgestellten und einer eingeklappten Stellung klappbar ist, mit folgenden Teilen:
- einer an einem Fahrzeugkörper zu montierenden Basis (11) mit einem abstehenden Teil (12), der an seiner Oberseite eine obere Trägerfläche (39) aufweist;
- einer am abstehenden Teil (12) innerhalb des Flächenbereichs der oberen Trägerfläche (39) montierte Welle (13), deren Achse die Klappachse bildet;
- einem Spiegelkörper (15), der von einem um die Welle (13) drehbaren Rahmen (14) getragen ist;
- einer Endplatte (17) des Rahmen (14), die die Welle (13) drehbar umschließt, eine Unterseite aufweist und vom abstehenden Teil (12) der Basis getragen wird, wobei die Unterseite in einem konstanten Abstand und parallel in Bezug zur gegenüberliegenden oberen Trägerfläche (39) des abstehenden Teils (12) der Basis so gehalten wird, daß während einer gegenseitigen Drehbewegung keine vertikale Verschiebung verursacht wird;
- einer Rahmenpositioniervorrichtung (20) für den drehbaren Rahmen, wobei diese Vorrichtung einen Positionsreferenzkörper (21, 40, 43, 70) enthält und gegebene Orientierungen des Rahmens in Bezug zur Basis definiert und durch eine Feder (27) geladen ist, die lösbar Koppelvorsprünge (24, 41, 44, 68) in komplementäre Koppelmulden (25, 42, 42a) drückt, wodurch sie in Bezug zur Drehposition die Endplatte (17) des Rahmens (14) lösbar mit dem Positionsreferenzkörper (21, 40, 43, 70) koppelt und wobei die Rahmenpositioniervorrichtung (20) einschließlich des Positionsreferenzkörpers (21, 40, 43, 70) auf der dem abstehenden Teil (12) der Basis gegenüberliegenden Seite der Endplatte (17) angeordnet ist,
dadurch gekennzeichnet, daß der Positionsreferenzkörper (21, 40, 43, 70) eine Führungsplatte ist, die die Welle (13) umdrehungsmäßig mit der Basis (11) verriegelt umgibt, und daß sich die Mulden (25, 42, 42a) oder die Vorsprünge (24, 41, 44, 68) auf der Endplatte (17) befinden.

2. Spiegelbaugruppe nach Anspruch 1, dadurch gekennzeichnet, daß der die Endplatte (17) des Rahmens tragende abstehende Teil (12) der Basis ein Unterteil der Welle (13) ist und die Unterseite der Endplatte (17) die Oberseite des abstehenden Teils (12) der Basis berührt.

3. Spiegelbaugruppe nach Anspruch 1 oder 2, dadurch gekennzeichnet, daß die Koppelvorsprünge (24, 68) auch in komplementäre Koppelmulden (45) einer Antriebsscheibe eingreifen, die mit einem einklappenden und ausstellenden Motor (51) verbunden ist.

4. Spiegelbaugruppe nach einem der Ansprüche 1 bis 3, dadurch gekennzeichnet, daß die Koppelvorsprünge Kugeln (24) sind, die in einer Käfigscheibe geführt sind, die der Positionsreferenzkörper (21) ist.

5. Spiegelbaugruppe nach Anspruch 4, dadurch gekennzeichnet, daß der als Käfigscheibe wirkende Positionsreferenzkörper (21), der die Kugeln (24) in nicht um die Welle herum drehbarer Weise hält, an der Welle (13) angreift, daß eine Anzahl kleiner Öffnungen (23) auf einem gemeinsamen Teilkreis der Käfigscheibe vorhanden sind, in die die Kugeln locker eingesetzt sind, und daß die Koppelmulden konkave Vertiefungen (25) an der betreffenden Fläche der Endplatte (17) sind und die Kugeln (24) in sich aufnehmen, wobei eine Ringscheibe (26) aufgrund der Elastizität der Feder (27), die eine um den Umfang der Welle (13) angeordnete Schraubenfeder ist und an ihrem anderen Ende an einer axial fixierten Scheibe (28) anliegt, auf die Kugeln (24) drückt.

6. Spiegelbaugruppe nach einem der Ansprüche 1 bis 3, dadurch gekennzeichnet, daß die Rahmenpositioniervorrichtung (20) an der Welle (13) drehfest und im Hinblick auf die Welle vertikal bewegbar angreift und an ihrer zur Endplatte (17) des Rahmens (14) gerichteten Seite einige Koppelvorsprünge (41, 44) abstehen, wobei die Koppelmulden konkave Vertiefungen (41, 42a) an der gegenüberliegenden Fläche der Endplatte (17) sind und die Seite mit den Koppelvorsprüngen und die Oberfläche mit den konkaven Vertiefungen durch die Feder (27) aneinandergepreßt sind.

7. Spiegelbaugruppe nach Anspruch 3, dadurch gekennzeichnet, daß der einklappende und ausstellende Motor (51) und ein im Spiegelkörper (15) vorhandenes Drehzahlreduktionsgetriebe (52), das ein Endzahnrad (54) aufweist, welches mit einem Zahnrad (55) kämmt, das über die durch die Führungsplatte (21) gehaltenen Kugeln (24) drehfest mit der Welle (13) verbunden ist, eine Betätigungsvorrichtung bilden, wobei das auf der Welle (13) sitzende Zahnrad (55) als die Antriebsscheibe dient.

8. Spiegelbaugruppe nach den Ansprüchen 3 oder 7, dadurch gekennzeichnet, daß der Positionsreferenzkörper (21, 70), der vertikal entlang der Welle (13) beweglich ist, in einen zwischen der Antriebsscheibe (55) und der Endplatte (17) des Rahmens (14) befindlichen Zwischenraum eingesetzt ist.

9. Spiegelbaugruppe nach Anspruch 8, dadurch gekennzeichnet, daß der Positionsreferenzkörper (70) Kugelteile (68) aufweist, die in konkaven Mulden (25, 45) an jeweiligen einander gegenüberliegenden Flächen der Antriebsscheibe (55) und der Endplatte (17) aufgenommen sind.

10. Spiegelbaugruppe nach den Ansprüchen 4 und 8, dadurch gekennzeichnet, daß der Positionsreferenzkörper, der die Form einer Führungsplatte (21) hat, durchgehende Löcher (23) zum lockeren Halten der Kugeln (24) in einer gleichen radialen Dimension um die Welle (13) aufweist; und daß die Kugeln (24) sich in den durchgehenden Löchern (23) befinden und in vertikaler Richtung beweglich sind.

11. Spiegelbaugruppe nach Anspruch 9, dadurch gekennzeichnet, daß die Kugelteile (68) integral mit dem Positionsreferenzkörper (70) gebildet sind, und zwar in Form einer Mehrzahl von Vorsprüngen in gleichen radialen Abständen von der Wellenachse.

## Revendications

1. Ensemble de rétroviseur extérieur repliable entre une position dépliée et une position pliée, comprenant :
un socle (11) devant être monté sur une carrosserie de véhicule et comprenant un prolongement (12) dont la partie supérieure comporte une surface support (39) supérieure ;
un arbre (13) monté sur le pronlongement (12) du socle dans la zone de la surface support (39) supérieure, l'axe de l'arbre (13) constituant l'axe de pliage ;
un boîtier de miroir (15) supporté par un cadre (14) installé en rotation autour de l'arbre (13) ;
une plaque d'extrémité (17) du cadre (14) entourant l'arbre de manière à pouvoir tourner autour de cet arbre, comportant une face inférieure et étant supportée par le prolongement (12) du socle alors que ladite face inférieure est maintenue à distance constante et parallèle par rapport à la surface support (39) supérieurs opposée du prolongement du socle (12), de façon à n'entraîner aucune translation verticale pendant un mouvement de rotation relative ;
un dispositif de positionnement de cadre (20) agissant sur le cadre rotatif, lequel dispositif comprend un élément de référence de position (21, 40, 43, 70) et définit des orientations prédéterminées du cadre par rapport au socle, ce dispositif étant en outre sollicité par un ressort (27), qui comprime de manière amovible les saillies d'accouplement (24, 41, 44, 68) à l'intérieur des évidements complémentaires d'accouplement (25, 42, 42a)de façon à accoupler de manière amovible, en référence à une position de rotation, la plaque d'extrémité (17) du cadre (14) par rapport à l'élément de référence de position (21, 40, 43, 70), le dispositif de positionnement du cadre (20) comprenant l'élément de référence de position (21, 40, 43, 70) disposé sur la face de la plaque d'extrémité (17) à l'opposé du prolongement (12) du socle, caractérisé en ce que l'élément de référence de position (21, 40, 43, 70) est une plaque de guidage entourant l'arbre (13) verrouillé en rotation sur la base (11), et en ce que les évidements (25, 42 et 42a) ou les saillies (24, 41, 44, 68) sont sur la plaque d'extrémité (17).

2. Ensemble de miroir selon la revendication 1, caractérisé en ce que le prolongement (12) du socle supportant la plaque d'extrémité (17) du cadre est une partie du socle de l'arbre (13) et en ce que la face inférieure de ladite plaque d'extrémité (17) est en contact avec la surface supérieure du prolongement (12) du socle.

3. Ensemble de miroir selon la revendication 1 ou 2, caractérisé en ce que les saillies (24, 68) d'accouplement viennent aussi en prise avec des évidements d'accouplement complémentaires (45) d'un disque d'entraînement accouplé à un moteur de pliage et de dépliage (51).

4. Ensemble de miroir selon l'une quelconque des revendications 1 à 3, caractérisé en ce que les saillies d'accouplement sont des billes (24) guidées dans un disque formant la cage qui constitue l'élément (21) de référence de posiiton.

5. Ensemble de miroir selon la revendication 4, caractérisé en ce que l'élément (21) de référence de position constituant un disque formant cage et retenant les billes (24) de façon à ce qu'elle se trouvent en rotation autour de l'abre, vient en prise avec l'arbre (13), en ce qu'une pluralité de petites ouvertures (23) sont formées sur la même circonférence du disque formant cage à l'intérieur desquelles les billes sont introduites librement, et en ce que les évidements d'accouplement sont des parties concaves (25) formées sur la surface correspondante de la plaque d'extrémité (17) pour recevoir les billes (24) à l'intérieur, une rondelle (26) appuyant sur les billes (24) grâce à l'élasticité du ressort (27) qui est un ressort en spirale placé autour de la périphérie de l'arbre (13) et qui, à son autre extrémité, est en contact avec une rondelle (28) fixe dans la direction axiale.

6. Ensemble de miroir selon l'une quelconque des revendications 1 à 3, caractérisé en ce que le dispositif (20) de positionnement du cadre vient en prise avec l'arbre (13) en rotation de manière fixe et en étant mobile verticalement par rapport à l'arbre, et en ce que, sur sa face orientée vers la plaque d'extrémité (17) du cadre (14) font saillie une pluralité de saillies d'accouplement (41, 44), les évidements d'accouplement étant des parties concaves (41, 42a) sur la surface opposée de ladite plaque d'extrémité (17), la face portant les saillies d'accouplement et la surface comportant les parties concaves étant comprimées l'une contre l'autre par le ressort (27).

7. Ensemble de miroir selon la revendication 3, caractérisé en ce que le moteur de pliage et de dépliage (51) et un engrenage réducteur de vitesse (52), placés dans le boîtier du miroir (15) et comportant un pignon d'extrémité (54), ce dernier venant en prise avec un pignon (55) rigidement monté en rotation sur l'arbre (13) par des billes (24), maintenues par la plaque de guidage (21), constituent un dispositif d'entraînement, le pignon (55) fixé sur l'arbre (13) servant de disque d'entraînement.

8. Ensemble de miroir selon la revendication 3 ou 7, caractérisé en ce que l'élément de référence de position (21, 70) qui est mobile verticalement le long de l'arbre (13) est introduit dans un espace formé entre le pignon (55) et la plaque d'extrémité (17) du cadre (14).

9. Ensemble de miroir selon la revendication 8, caractérisé en ce que l'élément de référence de position (70) comprend des parties de billes (68) logées dans des parties concaves (25, 45) sur des surfaces respectives en regard l'une de l'autre du pignon (55) et de la plaque d'extrémité (17).

10. Ensemble de miroir selon les revendications 4 et 8, caractérisé en ce que l'élément de référence de position qui a la forme d'une plaque de guidage (21) présente des orifices traversants (23) pour maintenir les billes (24) sans les serrer à une distance radiale constante autour de l'arbre (13) ; et en ce que les billes (24) sont placées dans les orifices traversants (23) et peuvent se déplacer dans la direction verticale.

11. Ensemble de miroir selon la revendication 9, caractérisé en ce que les parties de billes (68) sont intégralement formées dans l'élément de référence de position (70) sous la forme d'une pluralité de protubérances situées à des distances radiales égales à l'axe de l'arbre.
